# EUROPEAN PATENT APPLICATION

(11) **EP 3 226 210 A1**
(43) Date of publication of application: **04.10.2017**
(21) Application number: 16305357.2
(22) Date of filing: 29.03.2016
(51) Int. Cl.: G06T 13/80, G06T 7/00

(54) **METHOD AND DEVICE FOR GENERATING A CINEMAGRAPH FROM LIGHT FIELD IMAGES**

(71) Applicant: Thomson Licensing, 92130 Issy-les-Moulineaux (FR)
(72) Inventor: LANGLOIS, Tristan, 35576 CESSON-SEVIGNE (FR); KERBIRIOU, Paul, 35576 CESSON-SEVIGNE (FR); VANDAME, Benoit, 35576 CESSON-SEVIGNE (FR)
(74) Representative: Huchet, Anne

(57) **Abstract**

Device for generating a cinemagraph comprising:
- a module (201, 205) configured to determine at least one depth map for each light field image of a captured sequence of light field images;
- a module (201, 205) configured to determine, from a selection of one or several zones of the captured sequence each comprising at least one animation, at least one mask associated with a selected zone and with a corresponding range of depth;
- a module (201, 207) configure to generate the cinemagraph by applying one or several of the determined masks on at least one base frame image of the captured sequence.

## Description

### TECHNICAL FIELD

The present disclosure relates generally to cinemagraph and in particular to a method and device for generating a cinemagraph.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Cinemagraphs are commonly known as being a mixture of still images with a video. A cinemagraph provides an illusion that a viewer is watching a still image comprising some animations or, alternatively, a video clip containing motionless objects. The selection of the animation and the motion objects is usually performed in order to make the cinemagraph surprising for the viewer. Cinemagraphs are used to make still images more life-like and surprising and/or to draw the attention of the viewer on a special aspect on the image.

For creating a cinemagraph, desired moving objects may be selected from a sequence of images. One of the images may be selected for the still parts of the cinemagraph and the moving objects may be filtered out from the sequence. The animation of the moving objects may be obtained based on a plurality of the images of the sequence. The animation can be provided as a sequence of frames that is repeated in a loop. The plurality of the images that form the basis for the animation may be selected such that the result appears as a seamless loop of a movement.

### SUMMARY

The disclosure concerns a method for generating a cinemagraph. To this end, the method comprises at a processing device:
- determining at least one depth map for each light field image of a captured sequence of light field images;
- from a selection of one or several zones of the captured sequence each comprising at least one animation, determining at least one mask associated with a selected zone and with a corresponding range of depth;
- generating the cinemagraph by applying one or several of the determined masks on at least one base frame image of the captured sequence.

Such a method allows the creation of a cinemagraph from light field images.

According to an embodiment, the ranges of depth of the determined masks may be independent from each other.

According to an embodiment, a range of depth of a determined mask may comprise every depth value of each pixel of the zone associated with said determined mask.

According to an embodiment, a determined mask may be activated when its associated range of depth comprises a depth associated with a selected focal plane.

According to an embodiment, when a determined mask is activated, an animation associated with its corresponding zone may be played at initial playback speed.

According to an embodiment, at least some determined masks may be further associated with a variable playback speed.

According to an embodiment, the variable playback speed associated with a determined mask may be inversely proportional to a distance between a selected focal plan and said determined mask.

According to an embodiment, the method may further comprise automatically detecting zones comprising an animation in the captured sequence.

According to an embodiment, the method may further comprise highlighting selected zones, comprising an animation, whose associated ranges of depth overlap.

According to an embodiment, the method may further comprise automatically detecting zones comprising an animation in the captured sequence.

According to an embodiment, the sequence of light field images may be received from a capturing device, by the processing equipment.

In addition, the present disclosure further concerns a device for generating a cinemagraph. To this end, the device comprises:
- a module configured to determine at least one depth map for each light field image of a captured sequence of light field images;
- a module configured to determine, from a selection of one or several zones of the captured sequence each comprising at least one animation, at least one mask associated with a selected zone and with a corresponding range of depth;
- a module configure to generate the cinemagraph by applying one or several of the determined masks on at least one base frame image of the captured sequence.

According to an embodiment, the ranges of depth of the determined masks may be independent from each other.

According to an embodiment, a range of depth of a determined mask may comprise every depth value of each pixel of the zone associated with said determined mask.

According to an embodiment, a determined mask may be activated when its associated range of depth comprises a depth associated with a selected focal plane.

According to an embodiment, at least some determined masks may be further associated with a variable playback speed to play their corresponding animation.

A further aspect of the present disclosure concerns a device for generating a cinemagraph comprising at least one memory and at least one processing circuitry configured to perform:
- determining at least one depth map for each light field image of a captured sequence of light field images;
- from a selection of one or several zones of the captured sequence each comprising at least one animation, determining at least one mask associated with a selected zone and with a corresponding range of depth,
- generating the cinemagraph by applying one or several of the determined masks on at least one base frame image of the captured sequence.

Besides, the present disclosure is further directed to a non-transitory program storage device, readable by a computer, tangibly embodying a program of instructions executable by the computer to perform a method for generating a cinemagraph, which comprises:
- determining at least one depth map for each light field image of a captured sequence of light field images;
- from a selection of one or several zones of the captured sequence each comprising at least one animation, determining at least one mask associated with a selected zone and with a corresponding range of depth;
- generating the cinemagraph by applying one or several of the determined masks on at least one base frame image of the captured sequence.

The present disclosure also relies on a computer program product which is stored on a non-transitory computer readable medium and comprises program code instructions executable by a processor for implementing a method for generating a cinemagraph, which comprises:
- determining at least one depth map for each light field image of a captured sequence of light field images;
- from a selection of one or several zones of the captured sequence each comprising at least one animation, determining at least one mask associated with a selected zone and with a corresponding range of depth;
- generating the cinemagraph by applying one or several of the determined masks on at least one base frame image of the captured sequence.

The method according to the disclosure may be implemented in software on a programmable apparatus. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method for generating a cinemagraph according to the disclosure.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF THE DRAWINGS

The disclosure will be better understood and illustrated by means of the following embodiment and execution examples, in no way limitative, with reference to the appended figures on which:
- Figure 1 is a schematic diagram of an exemplary process used in some embodiments to capture a sequence of light field images of a scene;
- Figure 2 is a schematic block diagram of an exemplary processing device of some embodiments;
- Figure 3 is flow chart of an exemplary method used by some embodiments to generate a cinemagraph;
- Figures 4A, 4B and 4C show an exemplary cinemagraph wherein animations are played at variable playback speed.

Wherever possible, the same reference numerals will be used throughout the figures to refer to the same or like parts.

### DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

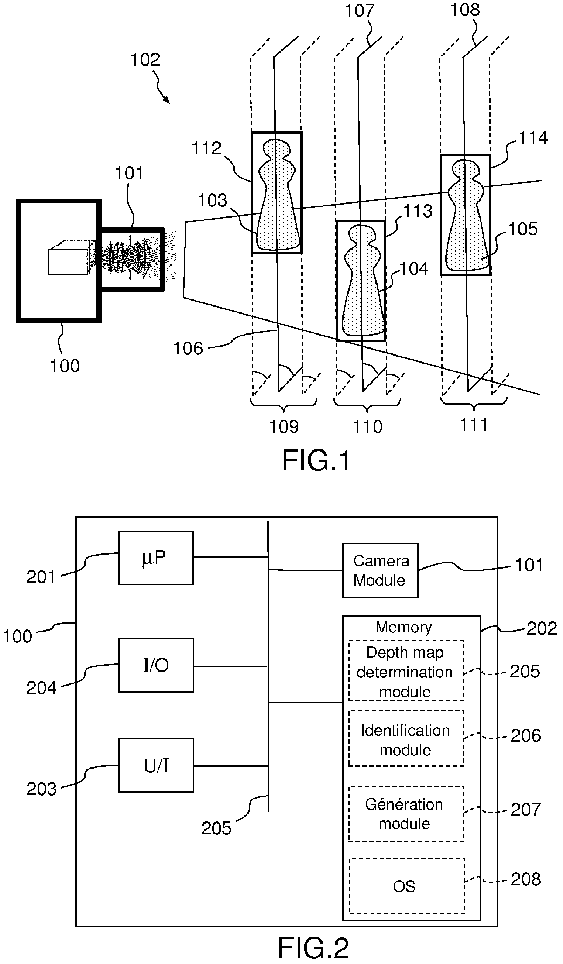

Figure 1 is a schematic diagram of a capture of a sequence of light field images of a scene 102 by a processing device 100, for use as a reference with which some exemplary embodiments can be described. The device 100 - such as a portable media device, a mobile phone, a digital camera, a tablet, a laptop, an HDTV or the like - is equipped with a light field camera 101. A light field camera can capture information about the intensity of light in a scene, and can also capture information about the direction that the light rays are traveling in space. One type of light field camera uses an array of micro-lenses placed in front of an otherwise image sensor to sense intensity, color, and directional information. Multi-camera arrays are another type of light field camera. As a result, a light field image may be defined as an image composition computed from multiple image shots (also referred to as views) from different viewpoints at one and the same moment by a light field camera. In a light field image (e.g. displays on a screen), the focal plane, the depth of field and/or the point of view may be selected, independently or in combination, by an end user.

As shown (for illustrative purpose only) in the non-limitative example of Figure 1, the device 100 can capture a scene 102 located in front of the light field camera 101. The scene 102 comprises three different elements 103, 104, 105 located in three distinct planes 106, 107 and 108. The elements 103, 104, 105 can be some static objects or any motion objects (such as a person, the face of a person, hair of person, smoke of cigarette, etc.). Naturally, the number of elements and/or planes may differ in the scene. In the following, it is assumed that elements 103, 104, 105 are animated objects.

In an embodiment, the processing device 100 is configured for generating a cinemagraph based on a sequence of light field images of a scene 102.

In another embodiment, the device 100 does not comprise any light field camera 101, but is adapted to receive a sequence of light field images in order to generate a cinemagraph.

Figure 2 is a schematic block diagram of an example of a structure of the processing device 100 shown in Figure 1. The device 100 may comprise a light field camera 101, a processing circuitry 201, a memory 202, user-interface (UI) elements 203, a communication interface I/O 204 and a communication bus 205.

The processing circuitry 201 may be an electronic component capable of executing instructions and processing data. The processing circuitry 201 may comprise one or more processing units (CPU(s)). The processing circuitry 201 is operative or configured to perform various signal processing and control functions of the device 100. According to an exemplary embodiment, the processing circuitry 201 may process audio, video and/or data signals provided from the communication interface 204 by performing functions including channel tuning, analog and digital demodulation, and other functions to thereby generate data representing audio, video and/or data content. The data produced from such processing functions may be provided for further processing (e.g. MPEG decoding) and output. Also, according to an exemplary embodiment, the processing circuitry 201 may detect and process user's inputs provided via the UI elements 203 and may control its own operations and/or output control signals to control other elements of the device 100 (including elements not shown in Figure 2) responsive to such user inputs. The processing circuitry 201 is also operative or configured to execute software code including software code for implementing the principle of the method described herein. The processing circuitry 201 runs various software programs and/or sets of instructions stored in the memory 202 to perform various functions for the device 100 and to process data.

Software components stored in the memory may include a depth map determination module 205 (or set of instructions) for determining a depth map for each light field images of a light field sequence, an identification module 206 and a generation module 207 in accordance with embodiments of the disclosure (see Figure 2). Other modules may be included such as an operating system module 208 for controlling general system tasks (power management, memory management) and for facilitating communication between the various hardware and software components of the processing device 100.

The memory 202 may be able to receive, store and/or provide data and instructions. For the clarity of the diagram, the memory 202 is represented in the form of a single block, but may comprise at one and the same time random-access memory, read-only memory and reprogrammable persistent memory (of example 'Flash' type).

The UI elements 203 may comprise various types of elements. For instance, examples of element types include display screens, touchscreens, buttons, switches, etc. Some embodiments may include audio/visual elements such as speakers and/or microphones. Haptic feedback elements may be included in some embodiments. The types, number, size, and/or arrangement of the UI elements may be based on various factors. For instance, a smartphone device may include a display screen, used as touchscreen, equipped with additional buttons.

The communications interface 204 may include electronics components such as transmitters and/or receivers that are able to communicate with various devices. The communication interface 204 may utilize wireless communication pathways and/or protocols (e.g. Bluetooth, Wi-Fi, etc.), wired pathways (e.g. universal serial bus or USB, Ethernet cable, etc.) and/or network based pathways.

The communication bus 205 may allow the various modules 101, 201 to 204 to communicate by passing data, instructions, commands, etc. among the various elements.

In Figure 2, it will be appreciated that the illustrated modules correspond to functional modules, which may or may not correspond to distinguishable physical units. For example, a plurality of such modules may be associated in a unique component or circuit, or correspond to software functionalities. Moreover, a module may potentially be composed of separate physical entities or software functionalities.

A functional module may be implemented as a hardware circuit comprising for example VLSI circuits or gate arrays, discrete semiconductor conductors such as logic chips, transistors etc. A module may also be implemented in a programmable hardware device such as field programmable gate arrays, programmable array logic, programmable logic devices or the like. Moreover modules may also be implemented as a combination of software and one or more hardware devices. For example a module may be embodied in the combination of a processor that operates a set of operational data. Moreover, a module may be implemented in the combination of an electronic signal communicate via transmission circuitry.

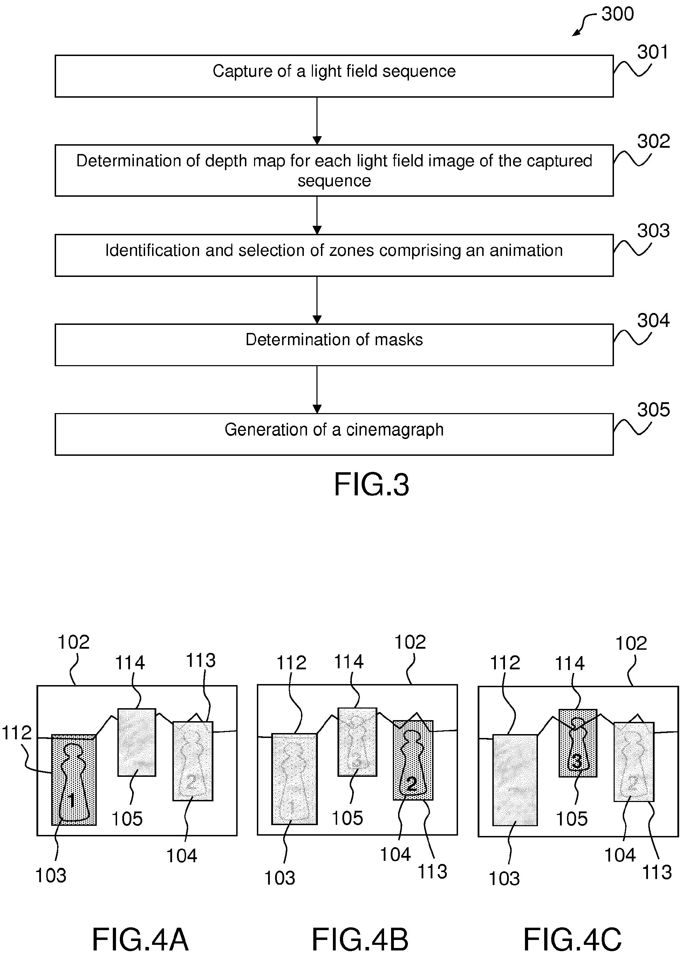

Figure 3 depicts a flow chart illustrating an example of a method 300 for generating a cinemagraph performed at the processing device 100, in accordance with an embodiment of the disclosure. The method 300 is illustrated using embodiments shown in Figures 1 and 2.

At step 301, a user of the processing device 100 may capture a sequence of light field images (so called light field sequence) with the light field camera 101 of the processing device 100. The captured sequence may be stored in the memory 202 of the device 100, for instance after having been preliminary processed by the processing circuitry 201.

In another embodiment, the processing device 100 may not be equipped with any light field camera, so that, instead of capturing a light field sequence, the processing device 100 may receive a light field sequence from a capturing device, for instance via a wireless and/or wired communication network (e.g. Bluetooth, Wi-Fi, Ethernet, etc.), said capturing device being equipped with a light field camera.

At step 302, the processing device 100 may determine (e.g. by the processing circuitry 201 and/or the depth map determination module 205 of memory 202) one depth map for each light field image of the captured light field sequence. A depth map assigns a corresponding depth value to each pixel of a light field image. As a result, a sequence of depth maps may be associated with the light-field sequence.

A depth map can be obtained from a disparity map. A disparity map can be computed from the comparison between two different views of a scene. By considering a view A (source) and a view B (target) of a scene, the disparity map is obtained by computing, for each pixel of the image, the offset between the view A (source) and the view B (target). The greater is the offset, the smaller is the depth. With a multi view system, the disparity (and then the depth) is computed, for each view, between this view (source) and one or several other view(s), to determine a depth map for each camera view of a light field image.

At step 303, the processing device 100 may launch (e.g. via the processing circuitry 201 and/or the memory 202 coupled with the UI elements 203) a loop playback of the light field sequence on a screen of the processing device 100. In an embodiment, the view associated with the light field sequence displayed may correspond to the central view from the camera 101. In addition, the image displayed on the screen may be all in-focus (namely the depth of field is infinite), so that all objects in the scene 102 appear sharp. Such a displayed light field sequence may further be called "reference sequence".

In step 303, a user interface may be presented (e.g. via the processing circuitry 201 and/or the memory 202 coupled with the UI elements 203) on the screen of the device 100 with which the user may interact. In an exemplary embodiment, the user may identify and select one or several zones of interest in the reference sequence displayed in such a way that each zone comprises at least one animated object. In an embodiment, the user may draw a line (e.g. by touching the screen with a finger, a stylus, etc.) to surround the animated object (or area) thanks to a drawing tool offered by the user interface. The processing device 100 may further determine a corresponding zone associated with the user's identification of the animated object, so that the animated object is still included within the corresponding zone throughout the whole reference sequence.

In a variant or in a complement, the processing device 100 may automatically identify (e.g. via the processing circuitry 201 and/or the identification module 206 of the memory 202) the zones associated with an animated object in the reference sequence (e.g. by processing vectors of movement associated with every pixel of images of the reference sequence). The user may only need to select the identified zone(s) he/she wants to use in the cinemagraph. In a further variant, the selection of identified zone(s) may be automatically performed by the processing device 100, the user does not even need to select any identified zones.

At step 304, whatever the type of determination of zones comprising an animated object is, the processing device 100 may further determine and associate a range of depth with every determined zone (e.g. via the processing circuitry 201 and/or the module 205 of the memory 202) in order to form a corresponding mask. For example, the range of depth associated with a determined zone may comprise the depth associated with every pixel of said determined zone along the whole reference sequence.

Since a light field image is composed of several views, a mask is determined from one these views (real or computed). The position of such a mask on the other views defining said light field image can be determined from the related offset of each element of a scene (corresponding to the light field image) on the other views, based on the geometric features of the light field camera 101.

In an embodiment, the processing device 100 may further detect an overlap in the ranges of depth of some identified zones (e.g. via the processing circuitry 201 and/or the module 205 of the memory 202) and may display a warning signal (e.g. by highlighting the corresponding zones) to let the user know that some identified zones have a common range of depth and are not independent from each other.

Referring to the example of Figure 1, as previously mentioned, the scene 102 captured by the device 100 may comprise three animated objects 103, 104, 105 located at different ranges of depth (without any overlap). Each animated object 103, 104, 105 including within the identified zones 112, 113, 114 may be defined by the corresponding plane 106, 107 and 108 and a range of depth 109, 110, 111. The selected zones 112, 113, 114 may have rectangular or polygonal shape or any other kind of appropriate shape.

Each mask is then associated with a selected zone 112, 113, 114 comprising an animated object 103, 104, 105, also referred hereinafter as an animation. Each mask can be used independently to enable or freeze the associated animation. Referring to the example of Figure 1, an animation of the zone 112 can be played for instance by activating the corresponding mask, whereas animations of the zones 113 and 114 can be frozen by disabling the corresponding masks.

Once a mask is selected and activated, the animation including in the corresponding zone may be played. When several masks are activated, the corresponding animations may be played concurrently. In an embodiment, when a mask is activated, the animation of the corresponding zone associated with said mask may be displayed on top of a still image (so called base frame).

At step 305, the processing device (e.g. via the processing circuitry 201 and/or the generation module 207 of the memory 202) may generate a cinemagraph by selecting one light field image of the light field sequence to be used as the still image (base frame) of the cinemagraph and by associating the determined masks. The selection may be done automatically or upon a user's action. When the still image is determined by the user, the latter may indicate his/her choice though a user interface displayed. In an embodiment, the user may choose the image most esthetically pleasing. The selected still image and the determined masks of the selected zones may define the cinemagraph. The still image may be continuously displayed when the cinemagraph is played and displayed on a screen. In a variant, several still images may be used in the cinemagraph and may be displayed, for instance, successively.

In an embodiment, in order to launch the playback of the generated cinemagraph on the processing device 100, the user may select the focal plane (and optionally the view), for instance, on the still image displayed (for instance all in-focus at first). Such selection may be performed for instance by touching a zone or a point on the screen of the processing device 100 he/she wants to see sharp (e.g. with a finger, a stylus, etc.). In a variant, the user may decide, for instance from a user interface displayed on the screen, to focus the image at a desired depth. In a variant or in a complement, the user interface displayed on the screen may propose to the user to choose a field of depth associated with the focal plane.

When the focal plane has been determined based, for instance, on the user's input, the processing device 100 (e.g. via the processing circuitry 201 and/or the module 205 of the memory 202) may determine whether the depth associated with the focal plane is included within the range of depth associated with the selected zones (at step 303). When the range of depth of one animation zone comprises the depth associated with the selected focal plane, the corresponding animation may be played by activating the corresponding mask. In other words, the selection of the focal plane may trigger the selection of the animation(s) to play. In an embodiment, such processes can be defined at step 305.

In an embodiment, the animations associated with the other identified zones (when they exist) - whose the corresponding ranges of depth does not comprise the focal plane - may be frozen or played at different speed, for instance faster (e.g. 36 frames per second (fps)) or slower (e.g. 12 fps) than the normal playback speed (e.g. 24 fps).

In a further embodiment, the playback speed of an animation may depend on the distance of its corresponding zone to the focal plane (i.e. the playback speed is variable). For instance, to compute such a distance, the average depth associated with the corresponding zone may be considered. In an embodiment, the playback speed may be inversely proportional to the distance between the depth of the focal plan and the depth of each zone. For instance, more an animation is close to the focal plane (in depth), more the playback speed of the animation is close to the initial playback speed; and more an animation is far away from the focal plane, more its playback speed is close to zero. In an embodiment, the playback back speed may be defined at step 305.

Referring to examples of Figures 4A to 4C, an animation is played at its initial playback speed when the focal plan falls within the range of depth of the corresponding mask (such as animation 103 (respectively 104, 105) on Figure 4A (respectively 4B, 4C). Animations - whose the ranges of depth of the corresponding masks do not comprise the focal plane - are played with a different playback speed than their initial playback speed. Thus, as shown in the example of Figure 4A, animation 104 - which is closer to the animation 103 than animation 105 - is played at playback speed lower than its initial speed, but higher than the playback speed of the animation 105.

In a variant, the user may activate the playback at initial speed of the other animations (independent from the focal plane) by touching the corresponding objects. Such a configuration can be defined at step 305.

In an embodiment, animations associated with identified zones may be played independently and asynchronously. Such a configuration can be defined at step 305.

In a further embodiment, a user interface displayed on the screen may allow the user to define the playback speed associated with every mask of the cinemagraph, for instance at step 305.

In a further embodiment, the processing device may be a remote server arranged in a communication network and configured for receiving light field sequence from a capturing device connected to the communication network. Once a cinemagraph is generated by the server, a display device, connected to the communication network, may receive the generated cinemagraph from the server so that a user may view the cinemagraph on the display device. The generation of the cinemagraph may be controlled by an application stored in the capturing device or, in a variant, in the remote server but accessible from the capturing device via a communication pathway.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. Method for generating a cinemagraph,
wherein it comprises, at a processing device (100):
- determining (302) at least one depth map for each light field image of a captured sequence of light field images;
- from a selection of one or several zones (112, 113, 114) of the captured sequence each comprising at least one animation (103, 104, 105), determining (303) at least one mask associated with a selected zone (112, 113, 114) and with a corresponding range of depth (109, 110, 111);
- generating (305) the cinemagraph by applying one or several of the determined masks on at least one base frame image of the captured sequence.

2. Method according to claim 1, wherein the ranges of depth of the determined masks are independent from each other.

3. Method according to claim 1 or 2, wherein a range of depth (109, 110, 111) of a determined mask comprises every depth value of each pixel of the zone (112, 113, 114) associated with said determined mask.

4. Method according to claims 1 to 3, wherein a determined mask is activated when its associated range of depth (109, 110, 111) comprises a depth associated with a selected focal plane.

5. Method according to claim 4, wherein, when a determined mask is activated, an animation associated with its corresponding zone is played at initial playback speed.

6. Method according to claims 1 to 3, wherein at least some determined masks are further associated with a variable playback speed.

7. Method according to claim 6, wherein the variable playback speed associated with a determined mask is inversely proportional to a distance between a selected focal plan and said determined mask.

8. Device for generating a cinemagraph,
wherein it comprises:
- a module (201, 205) configured to determine at least one depth map for each light field image of a captured sequence of light field images;
- a module (201, 205) configured to determine, from a selection of one or several zones (112, 113, 114) of the captured sequence each comprising at least one animation (103, 104, 105), at least one mask associated with a selected zone (112, 113, 114) and with a corresponding range of depth (109, 110, 111);
- a module (201, 207) configure to generate the cinemagraph by applying one or several of the determined masks on at least one base frame image of the captured sequence.

9. Device according to claim 8, wherein the ranges of depth of the determined masks are independent from each other.

10. Device according to claim 9 or 10, wherein a range of depth (109, 110, 111) of a determined mask comprises every depth value of each pixel of the zone (112, 113, 114) associated with said determined mask.

11. Device according to claim 9 or 10, wherein a determined mask is activated when its associated range of depth (109, 110, 111) comprises a depth associated with a selected focal plane.

12. Device according to claims 8 to 10, wherein at least some determined masks are further associated with a variable playback speed to play their corresponding animation.

13. Device for generating a cinemagraph,
wherein it comprises at least one memory (202) and at least one processing circuitry (201) configured to perform:
- determining (302) at least one depth map for each light field image of a captured sequence of light field images;
- from a selection of one or several zones (112, 113, 114) of the captured sequence each comprising at least one animation, determining (304) at least one mask associated with a selected zone (112, 113, 114) and with a corresponding range of depth (109, 110, 111),
- generating (305) the cinemagraph by applying one or several of the determined masks on at least one base frame image of the captured sequence.

14. A non-transitory program storage device, readable by a computer, tangibly embodying a program of instructions executable by the computer to perform a method for generating a cinemagraph, which comprises:
- determining (302) at least one depth map for each light field image of a captured sequence of light field images;
- from a selection of one or several zones (112, 113, 114) of the captured sequence each comprising at least one animation, determining (304) at least one mask associated with a selected zone (112, 113, 114) and with a corresponding range of depth (109, 110, 111);
- generating (305) the cinemagraph by applying one or several of the determined masks on at least one base frame image of the captured sequence.

15. Computer program product which is stored on a non-transitory computer readable medium and comprises program code instructions executable by a processor for implementing a method for generating a cinemagraph, which comprises:
- determining (302) at least one depth map for each light field image of a captured sequence of light field images;
- from a selection of one or several zones (112, 113, 114) of the captured sequence each comprising at least one animation, determining (304) at least one mask associated with a selected zone (112, 113, 114) and with a corresponding range of depth (109, 110, 111);
- generating (305) the cinemagraph by applying one or several of the determined masks on at least one base frame image of the captured sequence.
